Europäisches Patentamt

European Patent Office

Office européen des brevets

(11) Publication number: **0 092 537**
**A1**

## EUROPEAN PATENT APPLICATION

(21) Application number: 83850104.7

(22) Date of filing: 20.04.83

(51) Int. Cl.³: **A 21 C 13/00**, A 47 J 39/00,
A 23 L 3/34

(30) Priority: 21.04.82 SE 8202513

(43) Date of publication of application: 26.10.83
Bulletin 83/43

(84) Designated Contracting States: AT BE CH DE FR GB IT
LI NL

(71) Applicant: Rostfria AB Accurat, P.O. Box 438,
S-190 04 Upplands Väsby (SE)

(72) Inventor: Eriksson, Alf, Gösta Tamms Väg 37 B,
S-191 43 Sollentuna (SE)
Inventor: Hellström, Per, Jarlers väg 10, S-193 00 Sigtuna
(SE)

(74) Representative: Avellan-Hultman, Olle, Avellan-Huitman
Patentbyra AB P.O. Box 5366, S-102 46 Stockholm 5 (SE)

(54) **Conditioning apparatus, especially for food-stuffs.**

(57) A conditioning apparatus comprising a closed cupboard
(1) having one or more doors (2) or similar opening means and
useful for storing of goods, for instance food-stuffs for a time
of one or more days and nights, and in which said cupboard (1)
comprises a fan (19) in a shielded flow passageway (13) for
establishing a continuous air flow through the flow passage-
way (13) and in the conditioning cupboard (1). Further the
cupboard (1) comprises a cooling assembly (15), a heating
assembly (16) a damper (17) and an air outlet section (18). The
air inlet for the fan (19) is provided at or close to the ceiling of
the cupboard, and the air outlet section (18) is provided at or
close to the bottom of the cupboard. The different operation
parts are connected to a known type of electronic control unit
suited for adjusting cooling or heating and/or the humidity to
predetermined and by time varying conditions.

AVELLAN-HULTMAN PATENTBYRÅ AB
Ref: P-765


ROSTFRIA AB ACCURAT

Conditioning apparatus, especially for food-stuffs.
----------------------------------------------------

The present invention generally relates to a conditioning apparatus, by what is meant a chamber of container in which the temperature and the humidity of air can be controlled within wide limits and for different periods of time, for instance for different periods of the day and night. For many purposes it is wanted to vary the temperature and the humidity in a repeated way in order to improve the possibility of handling goods, to improve the quality of goods, to provide certain wanted activities in the goods or to simulate a natural day and night rythm of a specific character.

A conditioning apparatus favourably can be used for instance for simulating the nature in artificial cultivation of living matter such as plants, bacteriae etc. A conditioning apparatus also favourably can be used to give the goods, during certain periods of the day and night, a suitable consistency and a suitable humidity for being handled, whereas the apparatus during other periods of the day and night keeps the goods at such conditions that any bacterial or other influence or change of the goods is avoided.

The invention has been created especially in connection to handling of food-stuffs, and in the following the invention will mainly be described with reference to handling of food-stuffs, but it should be noted that the invention is not restriced to this technical field.

When handling food-stuffs it is often a wish that the goods during certain periods are kept at room temperature or at an elevated temperature, whereas during other periods of the day and night it may be a whish that the goods are cooled down to avoid any bacterial activation or decomposition. For instance in restaurants it is often wanted that meat, fish and other goods are kept at room temperature during the periods when dishes are to be prepared, since frying and any other preparation of the food is thereby facilitated and the gastronimic quality of the food is improved as compared with preparing of the food in a cooled condition. In som cases it is also wanted to maintain the humidity of the food at a predetermined level likewise for giving the prepared dishes a high gastronomic quality. On the other hand the dishes or the food-stuffs may be deteriorated by bacterial activity and other activities if the temperature is constantly kept at room temperature level or on an elevated level. Therefore it is a wish that the food-stuffs during other periods than the cooking periods are kept in a cooled condition.

A specific area of the food-stuff field is the bakery field. Usually a dough is scaled and moulded during the day time for being baked the next morning. For avoiding over-rising the dough should be kept at a low temperature during the night, so that the rising activity is substantially stopped. Before baking the temperature of the scaled and moulded dough, for instance the buns, the ryemeals etc. has to be brought back to normal room temperature and a suitible humidity so that the final rising and the baking should give the best possible results.

Previously the baker used to put the dough in a refrigerator-freezer during the night and to take out the dough when getting to the bakery in the morning. Bringing the temperature of the scaled and moulded dough back to room temperature, however, takes som time, and many times, especially in the winter, the humidity of the air in the bakery may be unsuitably low.

The object of the present invention therefore is to solve the problem of providing a conditioning apparatus for different kinds of goods and especially for food-stuffs, which is designed so that both the temperature and the humidity of the air can be varied for different periods of the day and night, whereby the food-stuffs always can be kept and handled at optimum temperature and humidity conditions. For meat, fish, vegetables and other fresh food-stuffs thus the temperature can be kept low at night, whereas the temperature and the humidity during other periods of the day and night are raised to a suitable level for cooking purposes. In a bakery the scaled and moulded dough at nights can be cooled down and be kept at a fairly low degree of humidity, whereas the temperature thereafter automatically is controlled so that the scaled and moulded dough has been brought back to the most suitable temperature and humidity for final rising and|or baking when the baker starts his work in the morning.

So, the invention relates to a conditioning apparatus, especially for food-stuffs and comprising a closed cupboard having doors or similar opening means and suited for temporary keeping goods for one or several days which goods for the best possible keeping need varying climate of conditioning states.

The cupboard includes means for air supported temperature and humidity control, whereby the temperature and the humidity during the keeping periods are kept at varying and predetermined conditions. Preferably the means for the air supported conditioning enclosed in a shielded flow passageway in the cupboard, in which flow passageway are provided both means for heating, for cooling and for increasing the humidity of the circulating air. The means for heating, cooling and increasing the humidity of the air are connected to an electronic control unit, by means of which the temperature and the humidity can be controlled in a predeterminable way for any wanted time relations.

Further characteristics of the invention will be evident from the following detailed description in which reference will be made to the accompanying drawings.

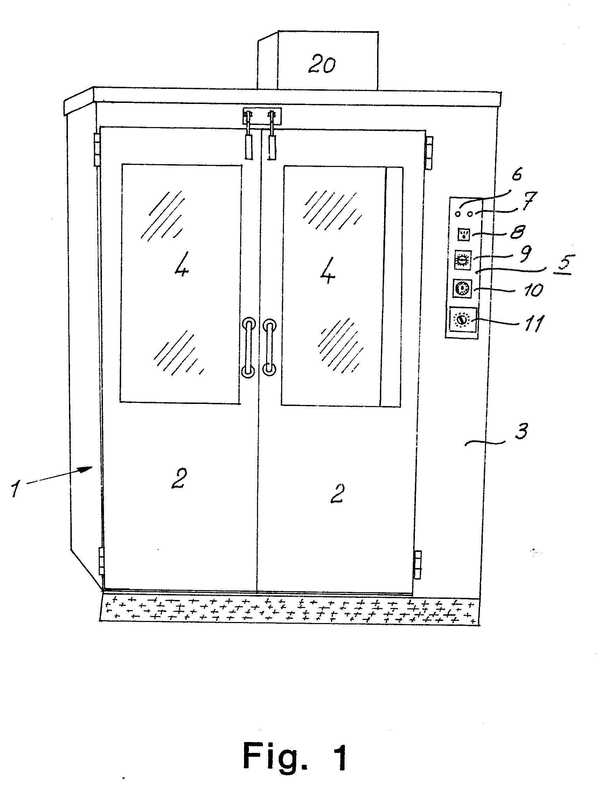

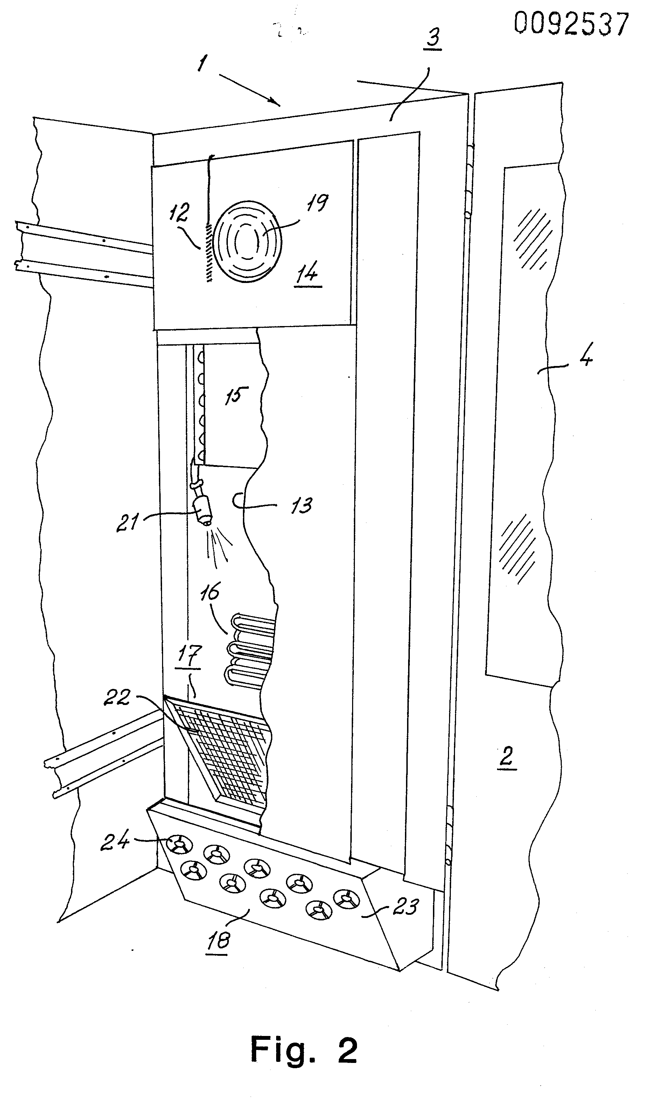

In the drawings figure 1 is a front view of an embodiment of a conditioning apparatus according to the invention, and figure 2 is a fragmentary perspective view from inside of the conditioning means, and in which figure some parts are shown broken away for illustrating purposes.

The illustrated embodiment of the conditioning apparatus is shown as a cupboard 1 having a bottom and a roof, a rear wall, two side walls and a front wall having two doors 2 which can be opened. With the doors shut the cupboard is a substantially hermetically closed unit.

The right sidewall 3 AS shown in figure 1 is formed as a box shaped apartment which encloses most of the necessary means for conditioning the air. All parts of the cupboard are made of a well insulating material, for instance a base material of insulating plastic like polyurethan resin, which on both sides is covered with a thin stainless plate or an aluminum plate. The different parts of the cupboard are joined to each other with good seals. The two front doors are formed with windows 4 of insulating glass, and the doors are connected to the the front wall over suitable air sealings. Also the doors are sealed against each other in the same way.

At the front of the illustrated right side wall there is shown an instrument panel 5 which is connected to an electronic unit of a type known per se för controlling the different functions of the conditioning cupboard as will be explained closer in the following. The known electronic control unit may be varied as is evident to the expert in the field and said control unit will not be explained in detail. On the instrument panel 5 there are shown in the order from up to down a first signal lamp 6 indicating when the cupboard works under cooling conditions, a second signal lamp 7 indicating when the cupboard works under heat, a three-way switch 8 for switching in the apparatus and for switching over between automatic and manual controlling, a temperature regulator 9 for adjusting both the heat wanted during a specific period and the chill wanted during another period, a time regulator 10 for adjusting the time during which specific heat and specific chill is to be connected and at which moment or moments there shall be a switching over from heat to chill and vice versa, and a timer 11 which is manually adjustable for connecting specific heating or specific cooling during varying times.

In the cupboard there is also a temperature sensor 12, shown in figure 2, and a hygrometer (not shown) which preferably is separately connected to means for increasing the humidity and which may be connected to the electronic unit so that the said means for increasing the humidity are disconnected during period of cooling and are connected only during periods of heating.

Figure 2 shows the conditioning section of the apparatus more in detail. Said conditioning section is a partly closed unit providing a passageway 13 through which the air of the conditioning cupboard is continuously passing and in which the air is controlled to the intended heating and cooling temperature and the intended humidity. The conditioning section 3 comprises five different main parts, viz. at the top a fan part 14, under said fan part a cooling assembly 15, a heating assembly 16, a damper 17 and an air outlet section 18.

The fan assembly 14 comprises a fan 19 which sucks air from the upper part of the cupboard and blows said air through the air passageway 13 and out through the air outlet section 18 at the lower part of the cupboard. Close to the air inlet of the fan 19 the temperature sensor 12 is mounted for continuous checking the temperature of the circulating air. The cooling assembly 15 may be of any suitable type and is preferably a cooling compressor assembly the compressor part 20 of which for cooling technical reasons is mounted on top of the roof of the cupboard. Only the cooling batteries are mounted in the air passageway 13 so that the flow of air sweeps through and past the cooling batteries. The heating assembly 16 may be electrical heating coils past which the air is continuously flowing. The damper 17 is formed with one or more water jet nozzles 21 which are mounted above the heating assembly 16 for ejecting one or more jets of water downwards onto a water diffusion disc 22 mounted under the heating assembly 16 for finely distributing and diffusing the water drops so that the air flow passing through the diffusion disc 22 is mixed with a mist of microscopically fine water particles. The diffusion disc 22 which is well permeable for air covers the entire air channel and is mounted at an angle backwards-rearwards.

The air outlet section 18 comprises an obliquely mounted plate 23 in which several outlet nozzles 24 are mounted so as to evenly distribute and spread the air in the entire cupboard, and so as to give a good air distribution and air circulation in the entire conditioning cupboard. In the illustrated case nine air outlet nozzles are mounted in the plate 23.

As previously mentioned the apparatus comprises a hygrometer (not illustrated) which is preferably mounted somewhere in the upper part of the conditioning cupboard. The hygrometer together with not illustrated control means for the water jet nozzles 21 are likewise connected to the electronic control unit. The hygrometer may have a separate control means for giving the intended humidity, by the invention also includes the possibility of mounting a regulator for the humidity in the regulator panel 5. In order to avoid the formation of ice crystals when operating under cooling the humidity preferably should be lowered, and therefore the hygrometer may be connected so that the damper 17 is disconnected during cooling operation but is automatically connected when operating at heat. For process technical reasons it is also wanted that the fan when operating at heat gives a rather low air velocity whereas it gives a substantially higher air velocity when operating for cooling.

For describing the function of the apparatus it is presupposed that the conditioning apparatus should be used in a bakery in which a scaled and moulded dough is put in the cupboard in the afternoon, that the temperature during the night is to be lowered to -8°C, that the cooling should be broken at 03.00 o'clock and that the scaled and moulded dough at 05.00 o'clock has a temperature of +38°C and that there is an air humidity of 80 % and that the entire apparatus is disconnected at 05.00 o'clock.

When the scaled and moulded dough has been introduced in the cupboard and the doors have been closed the regulator panel is adjusted as follows:

- the three way switch 8 is adjusted for manual operation
- on the temperature regulator the cooling temperature is adjusted to -8°C and the heating temperature to +38°C
- on the time regulator cooling is set for immediate operation until 03.00 o'clock the following day and heating is set from between 03.00 and 05.00 o'clock
- on the time regulator disconnection of the entire apparatus is set at 05.00 o'clock.

Further the hygrometer is adjusted for 80 % air humidity during the heating period.

The refrigerator compressor 20 immediately starts and transmits chill over the cooling assembly 15 to the flow of air circulating in the conditioning cupboard, over the fan 19 and through the air passageway and out through the air outlet section 18, whereby the fan operates at high speed and gives a high exchange of air. At this stage both the heating assembly 16 and the damper 17 are disconnected and the dough is kept at a temperature of -8°C until 03.00 o'clock the following day. At that time the cooling is discontinued and the heating is started, whereby the speed of the fan 19 is reduced and the heating assembly 16 is connected. The temperature of the circulating air is thereby successively increased to +38°C.

At the same time the hygrometer observes the humidity of the air which at this stage is substantially below 80 %. The hygrometer thereby activates the water jet nozzles 21 via the electronic control unit so that jets of water are sprayed onto the diffusion disc 22 and the air is mixed with a water mist when passing the diffusion disc 22. When the humidity has reached a value of 80 % the water jet nozzles 21 are closed. The heat is quickly increased to the intended temperature of +38°C and is maintained at this temperature until 05.00 o'clock when the electronic unit disconnects the entire conditioning apparatus.

It should be noted that the time regulator 10 can be formed and set in many different ways. The time regulator may for instance be set so that cooling is re-connected if the apparatus does not come into use within a predetermined period of time after 05.00 o'clock. Such non-use is noticed in that the three-way switch 8 is not switched over from automatical to manual operation. The time regulator also may be set so that it gives cooling during a specific period of time and a constant warm temperature during some other time all days of the week. The latter setting may be good in restaurants and other institutions in which the product kept in the cupboard, for instance the food-stuffs, preferably should be kept at a specific warm temperature during the times when the restaurant etc. is open, whereas the cupboard any other times should keep the products cooled at a specific temperature level. At any situation the conditioning apparatus can be switched over from automatical operation to manual operation, and at any time the temperature and the level of humidity may manually be readjusted.

It is to be understood that the above description and the embodiments of the invention shown in the drawings are only of illustrating character and that many different modifications may be presented within the scope of the appended claims.

C L A I M S
-----------

1.  Conditioning apparatus, e.g. for food-stuffs, comprising a cupboard (1) having doors (2) and useful at least for temporary storing, during a period of one or more days and nights, of goods which for the best possible storing are depending on varying conditioning states, c h a r a c t e r i z e d in that the cupboard includes means (14-18) for air born conditioning under conditions which may be varied according to predetermined needs.

2.  Conditioning apparatus according to claim 1, c h a r a c - t e r i z e d in that it comprises means for varying, in predetermined intervals, of the temperatur between freezing temperature and mediate hot temperature, e.g. between -10°C and +50°C.

3.  Conditioning apparatus according to claims 1 or 2, c h a r a c t e r i z e d in that the means for air born variation of the condition states are enclosed in a shielded flow passageway (13) through which the air of the cupboard is continuously circulated.

4.  Conditioning apparatus according to claim 3, c h a r a c - t e r i z e d in that the conditioning means comprises a cooling assembly (15), a heating assembly (16) and a damper (17) for alternating cooling, heating and|or increasing the humidity of the circulated air.

5.  Conditioning apparatus according to claim 4, c h a r a c - t e r i z e d in that the conditioning means are connected to an adjustable electronic control unit of a kind known per se for presetting of cooling, heating and|or increasing the humidity of the air under predetermined periods of time.

6.  Conditioning apparatus according to claim 3, 4 or 5, c h a r a c t e r i z e d in that the apparatus comprises an air fan (19) for setting the air into circulating movement and provided at the upper part of the flow passageway (13), and air outlet nozzles (24) provided in the lower region of the flow passageway at or close to the bottom of the cupboard.

7. Conditioning apparatus according to claim 6, c h a r a c - t e r i z e d  in that the fan (19) is connected and controllable so as to give a high air speed under cooling conditions and a lower air speed under heating conditions.

8. Conditioning apparatus according to claim 3, c h a r a c - t e r i z e d  in that the cooling assembly (15) and the heating assembly (16) are separate devices which both comprises tube coils past which the conditioning air flows.

9. Conditioning apparatus according to claims 3, c h a r a c - t e r i z e d  in that the damper (17) comprises one or more water jet nozzles (21) adapted to spray jets of water onto a tilted diffusion disc (22) provided in front of the air outlet nozzles (24) as seen in the flow direction of the air.

**Fig. 1**

0092537

Fig. 2

0092537

European Patent
Office

**EUROPEAN SEARCH REPORT**

Application number

EP 83 85 0104

## DOCUMENTS CONSIDERED TO BE RELEVANT

| Category | Citation of document with indication, where appropriate, of relevant passages | Relevant to claim | CLASSIFICATION OF THE APPLICATION (Int. Cl. $^3$) |
|---|---|---|---|
| X | US-A-3 479 971 (BENDER et al.) <br> * Claims; figures 1,2,10a,10b * | 1-5 | A 21 C 13/00 <br> A 47 J 39/00 <br> A 23 L 3/34 |
| X | FR-A-2 323 106 (BOUTON & BRIQUET) <br> * Claim 1 * | 1,4 | |
| A | FR-A- 973 365 (HODGES RESEARCH AND DEVELOPMENT CO.) <br> * Pages 2,3; figure 1 * | 6 | |
| A | FR-A-2 410 225 (TIPE REVENT AB.) <br> * Page 3, figures 1-3 * | 9 | |
| A | FR-A-2 465 959 (COSMAO) <br> * Pages 1,2; figure * | 9 | TECHNICAL FIELDS SEARCHED (Int. Cl. $^3$) |
| A | FR-A-2 484 201 (LOCOLAS, GRANGE) | | A 21 B <br> A 21 C <br> A 23 B <br> A 23 L <br> A 47 J <br> F 25 D |
| A | DE-C- 613 202 (METZENAUER & JUNG) | | |
| A | GB-A-2 066 651 (CIARAN JOSEPH COSTELLO) | | |
| A | DE-A-1 949 714 (VEB MONSATOR) | | |

The present search report has been drawn up for all claims

| Place of search | Date of completion of the search | Examiner |
|---|---|---|
| THE HAGUE | 04-07-1983 | WETZEL H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82